# EUROPEAN PATENT APPLICATION

(11) **EP 4 125 280 A1**
(43) Date of publication of application: **01.02.2023**
(21) Application number: 21188943.1
(22) Date of filing: 30.07.2021
(51) Int. Cl.: H04W 4/029, H04W 4/06

(54) **METHOD, APPARATUS AND COMPUTER PROGRAM**

(71) Applicant: Nokia Technologies Oy, 02610 Espoo (FI)
(72) Inventor: BELLING, Horst Thomas, 85435 Erding (DE); GODIN, Philippe, 78000 Versailles (FR)
(74) Representative: Roberts, David

(57) **Abstract**

There is provided an apparatus for a network function, the apparatus comprising means configured to perform, receiving, from a network access node, a first message comprising: a container for a further network function, and location information of a user equipment, and determining whether to include the location information of the user equipment in a second message to the further network function. The means are further configured to perform, in response to determining that the indication of location information of the user equipment is to be included, providing, to the further network function, the second message comprising: the container, and the location information of the user equipment.

## Description

### Field

The present application relates to a method, apparatus, and computer program for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

### Summary

According to an aspect, there is provided an apparatus for a network function, the apparatus comprising means configured to perform: receiving, from a network access node, a first message comprising: a container for a further network function, and location information of a user equipment; determining whether to include the location information of the user equipment in a second message to the further network function; and in response to determining that the indication of location information of the user equipment is to be included, providing, to the further network function, a second message comprising: the container, and the location information of the user equipment.

In an example, the first message comprises an indicator, the indicator requesting that location information of the user equipment is provided to the further network function, and wherein the determining whether to include the location information to the further network function is positive when the indicator is included in the first message.

In an example, the determining whether to include the location information to the further network function is positive when the user equipment is registered with Data Network Name and Network Slice Selection Assistance Information that is matching a list of preconfigured values at the apparatus.

In an example, the means are further configured to perform: retrieving information about one or more capabilities of the further network function, from a network repository function; determining, using the retrieved information, whether the further network function has one or more first capabilities; and wherein the determining whether to include the location information to the further network function is positive when the further network function has the one or more first capabilities.

In an example, the one or more first capabilities comprises a capability to support multicast sessions.

In an example, the means are further configured to perform: obtaining information about one or more capabilities of the further network function within a message from the further network function; determining, using the obtained information, whether the further network function has one or more second capabilities; and wherein the determining whether to include the location information to the further network function is positive when the further network function has the one or more second capabilities.

In an example, the one or more second capabilities comprises a capability to support receiving location information in a same message as a container for the further network function.

In an example, the means are further configured to perform: retrieving, from a unified data management, information about network function selection criteria for the further network function and the user equipment; determining, using the retrieved information about network function selection criteria, whether the further network function has one or more first network function selection criteria; and wherein the determining whether to include the location information to the further network function is positive when the further network function has the one or more first network function selection criteria.

In an example, the one or more first network function selection criteria comprises a capability to support multicast sessions.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided an apparatus for a network function comprising: one or more processors, and memory storing instructions that, when executed by the one or more processors, cause the apparatus to perform: receiving, from a network access node, a first message comprising: a container for a further network function, and location information of a user equipment; determining whether to include the location information of the user equipment in a second message to the further network function; and in response to determining that the indication of location information of the user equipment is to be included, providing, to the further network function, a second message comprising: the container, and the location information of the user equipment.

In an example, the first message comprises an indicator, the indicator requesting that location information of the user equipment is provided to the further network function, and wherein the determining whether to include the location information to the further network function is positive when the indicator is included in the first message.

In an example, the determining whether to include the location information to the further network function is positive when the user equipment is registered with Data Network Name and Network Slice Selection Assistance Information that is matching a list of preconfigured values at the apparatus.

In an example, the apparatus is caused to perform: retrieving information about one or more capabilities of the further network function, from a network repository function; determining, using the retrieved information, whether the further network function has one or more first capabilities; and wherein the determining whether to include the location information to the further network function is positive when the further network function has the one or more first capabilities.

In an example, the one or more first capabilities comprises a capability to support multicast sessions.

In an example, the apparatus is caused to perform: obtaining information about one or more capabilities of the further network function within a message from the further network function;
determining, using the obtained information, whether the further network function has one or more second capabilities; and wherein the determining whether to include the location information to the further network function is positive when the further network function has the one or more second capabilities.

In an example, the one or more second capabilities comprises a capability to support receiving location information in a same message as a container for the further network function.

In an example, the apparatus is caused to perform: retrieving, from a unified data management, information about network function selection criteria for the further network function and the user equipment; determining, using the retrieved information about network function selection criteria, whether the further network function has one or more first network function selection criteria; and wherein the determining whether to include the location information to the further network function is positive when the further network function has the one or more first network function selection criteria.

In an example, the one or more first network function selection criteria comprises a capability to support multicast sessions.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is a method performed by a network function comprising: receiving, from a network access node, a first message comprising: a container for a further network function, and location information of a user equipment; determining whether to include the location information of the user equipment in a second message to the further network function; and in response to determining that the indication of location information of the user equipment is to be included, providing, to the further network function, a second message comprising: the container, and the location information of the user equipment.

In an example, the first message comprises an indicator, the indicator requesting that location information of the user equipment is provided to the further network function, and wherein the determining whether to include the location information to the further network function is positive when the indicator is included in the first message.

In an example, the determining whether to include the location information to the further network function is positive when the user equipment is registered with Data Network Name and Network Slice Selection Assistance Information that is matching a list of preconfigured values at the apparatus.

In an example, the method comprises: retrieving information about one or more capabilities of the further network function, from a network repository function; determining, using the retrieved information, whether the further network function has one or more first capabilities; and wherein the determining whether to include the location information to the further network function is positive when the further network function has the one or more first capabilities.

In an example, the one or more first capabilities comprises a capability to support multicast sessions.

In an example, the method comprises: obtaining information about one or more capabilities of the further network function within a message from the further network function;
determining, using the obtained information, whether the further network function has one or more second capabilities; and wherein the determining whether to include the location information to the further network function is positive when the further network function has the one or more second capabilities.

In an example, the one or more second capabilities comprises a capability to support receiving location information in a same message as a container for the further network function.

In an example, the method comprises: retrieving, from a unified data management, information about network function selection criteria for the further network function and the user equipment; determining, using the retrieved information about network function selection criteria, whether the further network function has one or more first network function selection criteria; and wherein the determining whether to include the location information to the further network function is positive when the further network function has the one or more first network function selection criteria.

In an example, the one or more first network function selection criteria comprises a capability to support multicast sessions.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided an apparatus for a user equipment, the apparatus comprising means configured to perform: determining whether to request that location information of the user equipment is provided to a further network function; and providing, to a network access node, a message comprising: a container for the further network function, and, based on the result of the determination, an indicator requesting that location information of the user equipment is provided to the further network function.

In an example, the determining whether to request that location information of the user equipment is provided to a further network function is positive when the container comprises a request of the user equipment to join a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided an apparatus for a user equipment comprising: one or more processors, and memory storing instructions that, when executed by the one or more processors, cause the apparatus to perform: determining whether to request that location information of the user equipment is provided to a further network function; and providing, to a network access node, a message comprising: a container for the further network function, and, based on the result of the determination, an indicator requesting that location information of the user equipment is provided to the further network function.

In an example, the determining whether to request that location information of the user equipment is provided to a further network function is positive when the container comprises a request of the user equipment to join a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided a method performed by a user equipment comprising: one or more processors, and memory storing instructions that, when executed by the one or more processors, cause the apparatus to perform: determining whether to request that location information of the user equipment is provided to a further network function; and providing, to a network access node, a message comprising: a container for the further network function, and, based on the result of the determination, an indicator requesting that location information of the user equipment is provided to the further network function.

In an example, the determining whether to request that location information of the user equipment is provided to a further network function is positive when the container comprises a request of the user equipment to join a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided an apparatus for a network access node, the apparatus comprising means configured to perform: receiving, from a user equipment, a first message comprising a container to be sent to a further network function; determining whether to request that location information of the user equipment is provided to the further network function; and providing, to a network function, a second message comprising: the container for the further network function, and, based on the result of the determination, an indicator requesting that location information of the user equipment is provided to the further network function.

In an example, the determining whether to request that location information of the user equipment is provided to a further network function is positive when the first message from the user equipment comprises an indicator indicating that location information of the user equipment is to be provided to a further network function.

In an example, the determining whether to request that location information of the user equipment is provided to a further network function is positive when the user equipment is participating in a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided an apparatus for a network access node comprising: one or more processors, and memory storing instructions that, when executed by the one or more processors, cause the apparatus to perform: receiving, from a user equipment, a first message comprising a container to be sent to a further network function; determining whether to request that location information of the user equipment is provided to the further network function; and providing, to a network function, a second message comprising: the container for the further network function, and, based on the result of the determination, an indicator requesting that location information of the user equipment is provided to the further network function.

In an example, the determining whether to request that location information of the user equipment is provided to a further network function is positive when the first message from the user equipment comprises an indicator indicating that location information of the user equipment is to be provided to a further network function.

In an example, the determining whether to request that location information of the user equipment is provided to a further network function is positive when the user equipment is participating in a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided a method performed by a network access node comprising: receiving, from a user equipment, a first message comprising a container to be sent to a further network function; determining whether to request that location information of the user equipment is provided to the further network function; and providing, to a network function, a second message comprising: the container for the further network function, and, based on the result of the determination, an indicator requesting that location information of the user equipment is provided to the further network function.

In an example, the determining whether to request that location information of the user equipment is provided to a further network function is positive when the first message from the user equipment comprises an indicator indicating that location information of the user equipment is to be provided to a further network function.

In an example, the determining whether to request that location information of the user equipment is provided to a further network function is positive when the user equipment is participating in a multicast session.

In an example, the container is an N1 session management container.

In an example, the container comprises a request for the user equipment to join a multicast session within: a protocol data unit session modification request, or a protocol data unit session setup request.

In an example, the location information of the user equipment comprises a cell identity of the user equipment.

In an example, at least one of: the network function comprises an access and mobility management function, the further network function comprises a session management function, and the network access node comprises a radio access node.

According to an aspect, there is provided a computer program comprising computer executable instructions which when run on one or more processors perform: receiving, from a network access node, a first message comprising: a container for a further network function, and location information of a user equipment; determining whether to include the location information of the user equipment in a second message to the further network function; and in response to determining that the indication of location information of the user equipment is to be included, providing, to the further network function, a second message comprising: the container, and the location information of the user equipment.

According to an aspect, there is provided a computer program comprising computer executable instructions which when run on one or more processors perform: determining whether to request that location information of the user equipment is provided to a further network function; and providing, to a network access node, a message comprising: a container for the further network function, and, based on the result of the determination, an indicator requesting that location information of the user equipment is provided to the further network function.

According to an aspect, there is provided a computer program comprising computer executable instructions which when run on one or more processors perform: receiving, from a user equipment, a first message comprising a container to be sent to a further network function; determining whether to request that location information of the user equipment is provided to the further network function; and providing, to a network function, a second message comprising: the container for the further network function, and, based on the result of the determination, an indicator requesting that location information of the user equipment is provided to the further network function.

According to an aspect, there is provided an apparatus for a user equipment, the apparatus comprising means configured to perform: providing, to a network function via a network access node, a first message comprising: a container for a further network function, and an indicator requesting that location information of the user equipment is provided to the further network function.

A computer product stored on a medium may cause an apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### List of abbreviations:

- AF:: Application Function
- AMF:: Access Management Function
- AN:: Access Network
- BS:: Base Station
- CN:: Core Network
- DL:: Downlink
- DNN:: Data Network Name
- eNB:: eNodeB
- gNB:: gNodeB
- LTE:: Long Term Evolution
- MBS:: Multicast/Broadcast Service
- MBSF:: Multicast/Broadcast Service Function
- MB-SMF:: Multicast/Broadcast Management Function
- MS:: Mobile Station
- NAS:: Non-Access Stratum
- NEF:: Network Exposure Function
- NG-RAN:: Next Generation Radio Access Network
- NGAP:: Next Generation Application Protocol
- NF:: Network Function
- NR:: New Radio
- NRF:: Network Repository Function
- NSSAI:: Network Slice Selection Assistance Information
- NW:: Network
- PCF: Policy Control Function
- PDU:: Protocol Data Unit
- PLMN:: Public Land Mobile Network
- RAN:: Radio Access Network
- RF:: Radio Frequency
- RRC:: Radio Resource Control
- SM:: Session Management
- SMF:: Session Management Function
- UE:: User Equipment
- UDR:: Unified Data Repository
- UDM:: Unified Data Management
- UL:: Uplink
- UPF:: User Plane Function
- 3GPP:: 3^{rd} Generation Partnership Project
- 5G:: 5^{th} Generation
- 5GC:: 5G Core network
- 5G-AN:: 5G Radio Access Network
- 5GS:: 5G System

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4a shows a first part of a signalling diagram for a protocol data unit session modification for a user equipment joining a multicast session;
Figure 4b shows a second part of the signalling diagram for a protocol data unit session modification for a user equipment joining a multicast session;
Figure 5 shows an example signalling diagram between network entities and a user equipment for joining a multicast session;
Figure 6 shows another example signalling diagram between network entities and a user equipment for joining a multicast session;
Figure 7 shows an example method flow diagram performed by a network function;
Figure 8 shows an example method flow diagram performed by a user equipment;
Figure 9 shows an example method flow diagram performed by a network access node; and
Figure 10 shows a schematic representation of a non-volatile memory medium storing instructions which when executed by a processor allow a processor to perform one or more of the steps of the method of Figures 7 to 9.

### Detailed description

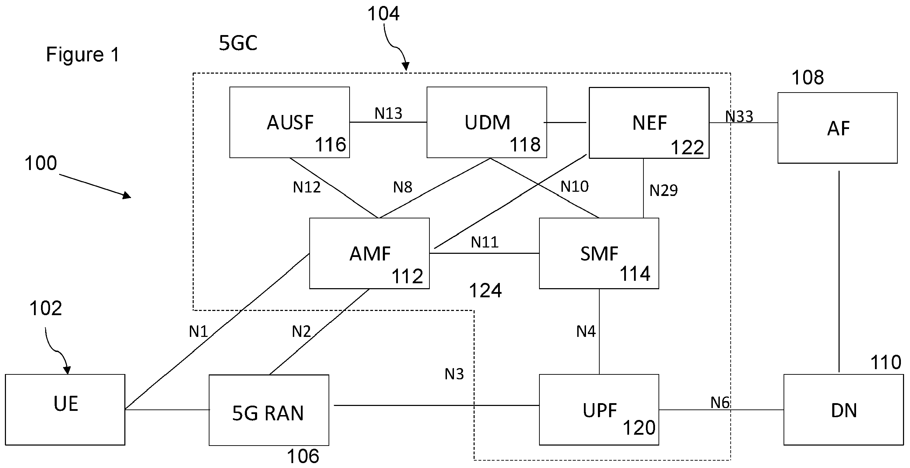

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following, certain examples are explained with reference to mobile communication devices capable of communication via a wireless cellular system and mobile communication systems serving such mobile communication devices. Before explaining in detail the examples of the disclosure, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS) 100. The 5GS may comprise a device 102 such as user equipment or terminal, a 5G access network (5G-AN) 106, a 5G core network (5GC) 104, one or more network functions (NF), one or more application function (AF) 108 and one or more data networks (DN) 110.

The 5G-AN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G, beyond 5G, 6G, etc., and other 3GPP standards.

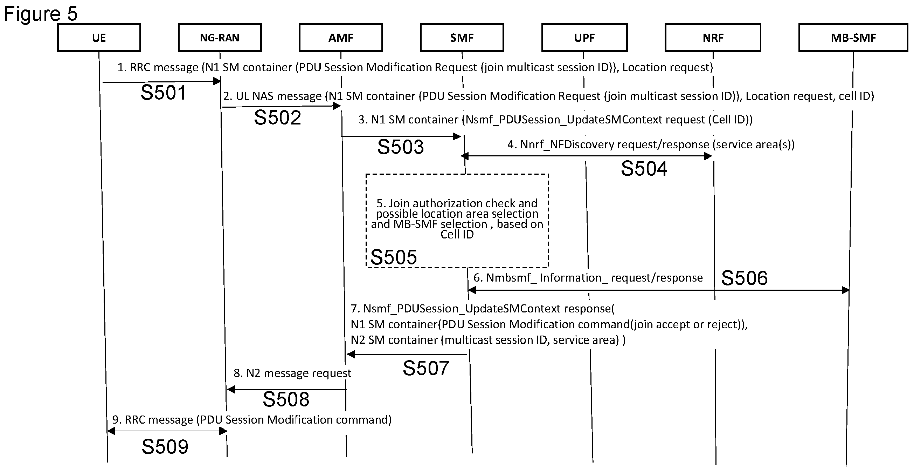

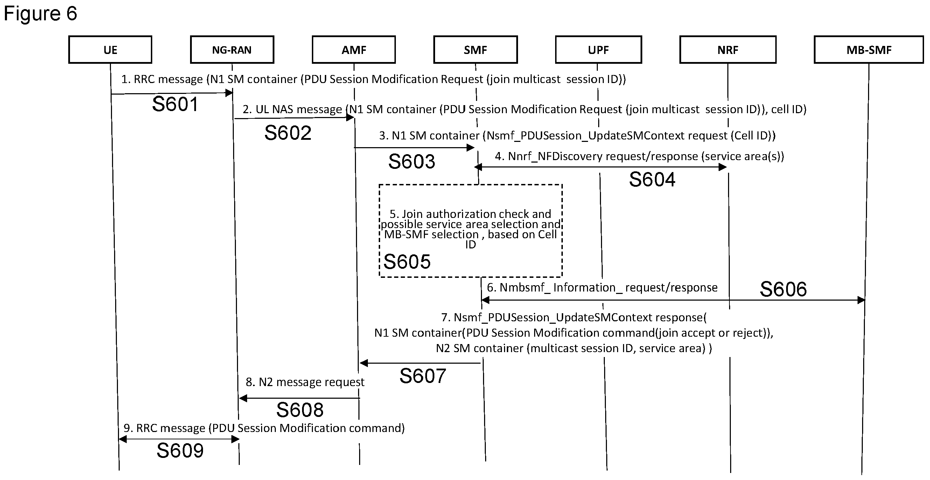

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier. Terminal 102 is also depicted in Figure 5, with labels 10, 16, 19, 20A, 20B. Terminal 102 is also depicted in Figure 6 with label 601, for example. The terminal 102 may use communications services. Two or more terminals may use the same communications services. In other examples, two or more terminals may have different services from each other.

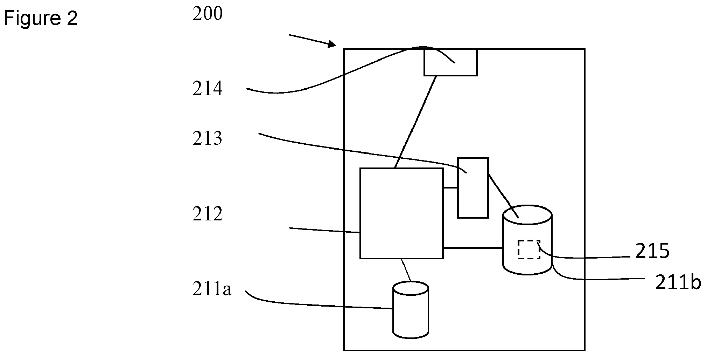

Figure 2 illustrates an example of a control apparatus 200 for controlling a function of the 5G-AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

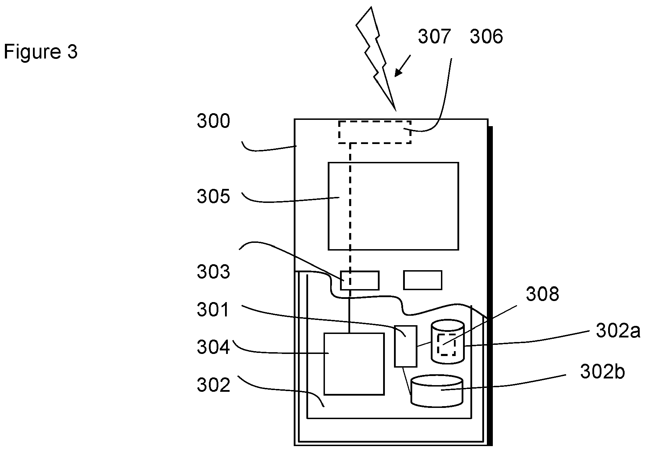

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Some of the following examples are related to multicast/broadcast services (MBS). MBS is a point-to-multipoint communication scheme. As part of this scheme, data can be transmitted simultaneously from a single source to multiple destinations/devices. Broadcast refers to the ability to deliver content to all users. Multicast refers to distribution of content for services among a specific group of devices or users that are subscribed to those services. The multicast and broadcast content may be transmitted over a geographical area referred to as a zone. An MBS zone is a collection of one or more network access nodes (i.e. base stations) that are capable of transmitting the same content.

A local MBS service is an MBS service provided in one or more MBS service areas. An MBS service area may be identified by a cell list. Alternatively or in addition, an MBS service may be identified by a tracking area (TA) list. A TA can be made up of a list cells or gNBs. Only UEs located within an MBS service area may receive content data for that service. UEs that are located outside the MBS service area are not allowed to receive location specific content. For multicast communication, UEs outside the MBS service area are not allowed to join the MBS service. When a UE physically moves outside of the MBS service area, then the network will not continue to deliver location-specific content to the UE.

A location dependent MBS is a local MBS that is provided in several MBS service areas. A location dependent MBS service enables distribution of different content data to different MBS service areas. A same MBS session identity (ID) is used for a location dependent MBS, but a different area session ID is used for each MBS service area. The area session ID is used, in combination with MBS session ID, to uniquely identify the service area specific part of the MBS service within 5GS. The network supports the location-dependent content distribution for the location dependent MBS services. UEs are only aware of the MBS session ID. The UEs are not required to be aware of the area session IDs. When UEs move to a new MBS service area, content data from the new MBS service area may be delivered to the UE, and the network ceases to deliver the content data from the old MBS service areas to the UE. Information about different MBS service areas for a location dependent MBS service may be provided by one or several application functions (AFs). Alternatively, the information about different MBS service areas for a location dependent MBS service may be configured. Different ingress points for location dependent points for the MBS session are supported for different MBS service area dependent content of the MBS session. Different multicast/broadcast-session management functions (MB-SMFs) and/or multicast/broadcast-user place functions (MB-UPFs) may be assigned for different MBS service areas in an MBS session.

In current systems, a UE may provide a request to join an MBS session to the network. The request may indicate an MBS session ID and an area session ID. This request may arrive at a session management function (SMF) of the network. However, the SMF may have no information about a multicast session context for the indicated MBS session ID and the area session ID. If there is no such information, then the SMF requests MB-SMF information via an *'Nnrf_NFDiscovery request'* message (MBS Session ID). In response, an NRF provides information about an MB-SMF(s) serving the MBS service area(s), via an *'Nnrf_NFDiscovery response'* message (MB-SMF ID, Area Session ID, MBS service area). The SMF selects the MB-SMF based on a location where the UE is residing. The SMF interacts with the selected MB-SMF to retrieve quality of service (QoS) information of the multicast QoS flow(s) for the MBS session ID and the area session ID.

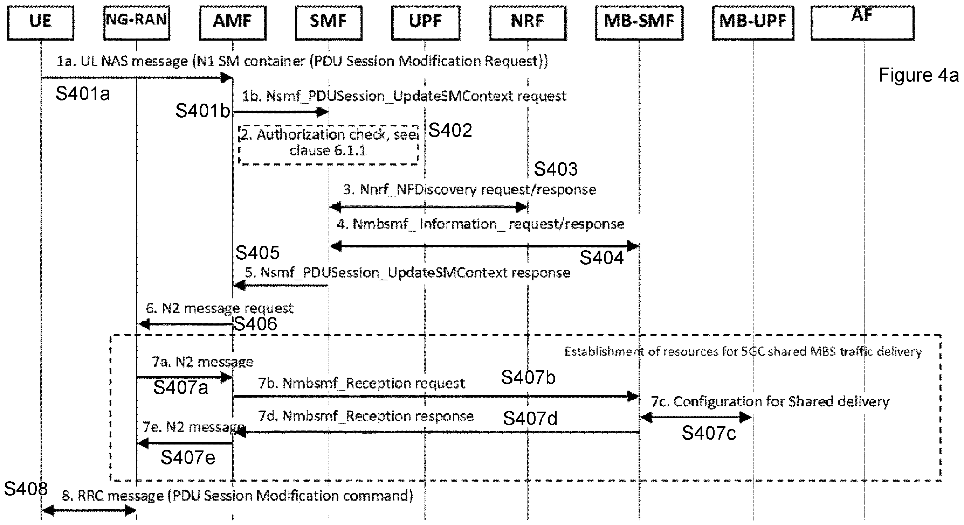

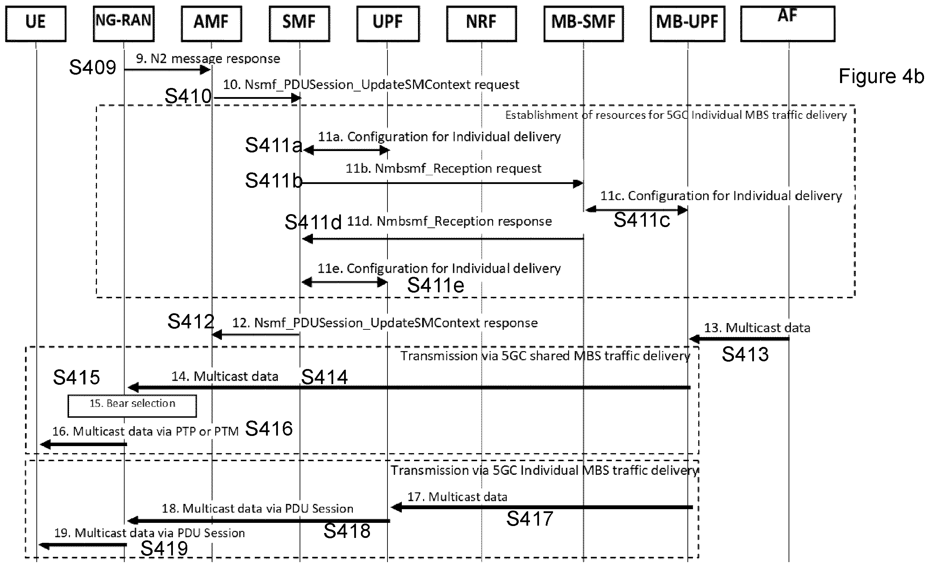

Figures 4a and 4b show a protocol data unit (PDU) session modification for a UE joining a multicast session according to current specification. Figure 4b continues on the signalling of the same procedure from Figure 4a. In these Figures, it is assumed that an MBS session has already been configured. The UE then registers in the public land mobile network (PLMN), and establishes a PDU session. Lastly, it is assumed that the UE knows at least the MBS session ID of a multicast group that the UE intends to join. The UE may learn this MDS session ID, for example, via a service announcement.

To join a multicast group, the UE sends a PDU session modification request which comprises one or several MBS session ID(s) and a join request to join at least one multicast group. The MBS session ID(s) indicates the multicast group(s) that the UE wants to join.

Based on the received MBS session ID(s) and the join request, an SMF determines that this is an MBS session join request. The SMF authorizes the MBS session join request for each multicast group. If the multicast MBS session is configured but the configuration indicates that the service requirements are not provided yet, the SMF may reject the MBS session join with an appropriate cause value. If the authorization check fails, the SMF indicates a cause value in the PDU session modification reject sent to the UE. This will be discussed in more detail below, with the signalling steps of Figures 4a and 4b.

In S401a, a UE sends an uplink (UL) non-access stratum (NAS) message including an N1 session management (SM) container to an AMF. The N1 SM container comprises a PDU session modification request.

In S401b, the AMF sends an 'Nsmf_PDUSession_UpdateSMContext' request message to an SMF.

In S402, the SMF performs an authorization check according to the details included in the N1 SM container.

In S403, the SMF sends an 'Nnrf_NFDiscovery' request message to the NRF. The NRF then sends a response message to the SMF.

In S404, the SMF sends an 'Nmbsmf_Information' request message to an MB-SMF. The MB-SMF then sends a response message to the SMF.

In S405, the SMF sends an 'Nsmf_PDUSession_UpdateSMContext' response message to the AMF.

In S406, the AMF sends an N2 message request to an NG-RAN (network access node).

If a shared tunnel has not been established for the MBS session, step S407 is used for establishing 5GC shared MBS traffic delivery. Step S407 is executed separately for each MBS session:
In S407a, the NG-RAN sends an N2 message to the AMF.

In S407b, the AMF sends an 'Nmbsmf_Reception' request message to the MB-SMF.

In S407c, the MB-SMF and MB-UPF share a configuration for shared delivery.

In S407d, the MB-SMF sends a 'Nmbsmf_Reception' response message to the AMF.

In S407a, the AMF sends an N2 message to the NG-RAN.

Steps S407a to S407e make up the steps for the establishment of resources for 5GC shared MBS traffic delivery.

In S408, the NG-RAN and the UE exchange radio resource control (RRC) messages including a PDU session modification command.

Now moving to Figure 4b:
In S409, the NG-RAN sends an N2 response message to the AMF.

In S410, the AMF sends an 'Nsmf_PDUSession_updateSMContext' request message to the SMF.

Step S411 is used for 5GC individual MBS traffic delivery. For example, the related NG-RAN does not support multicast. If the shared tunnel between the UPF and MB-UPF for individual delivery has not been established, steps S411a to S411e are executed.

In S411a, the SMF and UPF exchange the configuration for individual delivery.

In S411b, the SMF sends an 'Nmbsmf_Reception' request message to the MB-SMF.

In S411c, the MB-SMF and MB-UPF exchange the configuration for individual delivery.

In S411d, the MB-SMF sends an 'Nmbsmf_Reception' response message to the SMF.

In S411e, the SMF and UPF exchange the configuration for individual delivery.

Steps S411a to S411e make up the steps for the establishment of resources for 5GC individual MBS traffic delivery.

In S412, the SMF sends an 'Nsmf_PDUSession_UpdateSMContext' response message to the AMF.

In S413, the AF sends multicast data to the MB-UPF.

In S414, the MB-UPF forwards the multicast data to the NG-RAN.

In S415, the NG-RAN selects point to multipoint (PTM) or point to point (PTP) radio bearers to deliver the multicast PDUs to the UE that joined the multicast group.

In S416, the NG-RAN performs the multicast data transmission using the selected radio bearer.

Steps S417 to S419 are for 5GC individual MBS traffic delivery:
In S417, the MB-UPF sends multicast PDUs in the tunnel associated to the multicast distribution session to UPF. There is only one tunnel per multicast distribution session and destination UPF. For example, all associated PDU sessions share this tunnel.

In S418, the UPF forwards the multicast data via PDU session (unicast).

In S419, the NG-RAN forwards the multicast data via the PDU session (unicast).

In the mechanism shown above in Figures 4a and 4b, the SMF needs to know the UE location when a UE requests to joins a multicast/MBS session. The SMF needs to know the UE location to determine whether or not to accept the join request, when the multicast session is a local multicast service. Also, the SMF needs to know the UE location to select a service area and a MB-SMF, when the multicast session is a location-dependent multicast/MBS service. However, in the above mechanism, the SMF does not initially know the UE location information. The SMF is required to signal other NFs in order to determine this information.

It would be desirable to avoid the need of extra signalling messages to provide the location information to the SMF.

One or more of the examples below aims to address one or more of the problems identified above.

In an example, a UE provides, to the network, an RRC message which carries an NAS message comprising a join request for an MBS session, wherein the NAS message comprises an indicator requesting UE location provisioning to the SMF. The network access node that receives this indicator sends the indicator to an AMF. When receiving the indicator, the AMF sends location information of the UE to the SMF in a message that also comprises a join request for the UE to join the MBS session. The location information of the UE may comprise a cell identity of the user equipment. As the AMF will provide the cell ID of the UE when it receives the indicator, this means that it is only provided by the AMF when it will be useful. This will reduce signalling overhead. This will be illustrated in more detail below alongside Figure 5.

In an example, an AMF receives location information of a UE, from a network access node, in a next-generation application protocol (NGAP) UL NAS transport message. The location information of the UE may comprise a cell identity of the user equipment. Once the AMF has received the cell ID, the AMF sends an NAS container to an SMF with the received cell ID of the UE in the container. The AMF may provide the cell ID of the UE to the SMF every time the AMF communicates with the SMF. The AMF may alternatively apply this behaviour only if the SMF supports MBS. The AMF may alternatively apply this behaviour only if MBS support is part of the SMF selection criteria in the UDM. The AMF may alternatively apply this behaviour only if the UE is registered with a specific data network. The data network may be identified with a data network name (DNN). The AMF may alternatively apply this behaviour only if the UE is registered/configured with a specific network slice. The network slice may be identified with single-network slice selection assistance information (S-NSSAI). The conditional provision of the location information of the UE in the message means that the additional information is only provided when it will be used. This will reduce signalling overhead. This will be illustrated in more detail below alongside Figure 6.

Figure 5 shows an example signalling diagram between network entities and a user equipment for joining a multicast session.

In S501, a UE provides a first message to a network access node (NG-RAN). The first message may be an RRC message. In other examples, another suitable message type is used. The first message comprises an N1 session management (SM) container with a PDU session modification request with a request for the UE to join a multicast (MBS) session. The first message also comprises a request that the UE location is provided to the SMF. The request that the UE location is provided to the SMF may be provided outside of the N1 SM container.

In an example, the UE determines whether to request that the location information of the user equipment is provided to a further network function. The UE may perform the determination based on whether the message the UE is sending to the network is a multicast session. The UE may provide, to the NG-RAN, a message comprising: a container for the further network function, and an indicator requesting that location information of the user equipment is provided to the further network function when the UE has determined that it is a multicast session.

In S502, the network access node (NG-RAN) provides a second message to an AMF. The second message may be an uplink NAS message. In other examples, another suitable message type is used. Within the second message, the NG-RAN node includes the N1 SM container comprising the MBS session join request. The second message further comprising location information of the user equipment. The location information may comprise a cell ID of the UE. The NG-RAN exchanges signalling with the UE via a cell, which provides the cell ID of the UE. Further, the second message also includes a request that the UE location is provided to the SMF. It is noted that the NG-RAN cannot decrypt/decode the N1 SM container received from the UE itself.

In S503, the AMF has received the second message from the NG-RAN. The N1 SM container is transparent for the AMF. The AMF does not know that the N1 SM container comprises the join request. The AMF then provides a third message to the SMF. The third message may be a 'Nsmf_PDUSession_UpdateSMContext' request message. In other examples, another suitable message type is used. The third message comprises the cell ID of the UE. The third message also comprises the information from the N1 SM container.

In S504, the SMF retrieves the service area and the related MB-SMF of the multicast session from an NRF. In some examples, there may be a plurality of service areas and/or MB-SMFs. As the SMF has received the location information of the UE in the cell ID, the SMF does not need to perform any more additional signalling in order to determine the location of the UE.

In S505, the SMF determines whether the UE is in a service area of the requested multicast session. The SMF may determine whether the UE is in a service area of the requested multicast session using the received cell ID of the UE. The SMF may reject the join request of the UE if the UE is outside the service area (or service areas) of the multicast session. If there are multiple service areas for a location-dependent multicast session, the SMF selects the service area and related SMF based on the received cell ID of the UE.

In S506, the SMF retrieves information related to the requested multicast session from the determined MB-SMF. The SMF may provide an 'Nmbsmf_ Information_request' message to the MB-SMF. The MB-SMF may respond with a 'Nmbsmf_Information_response' message including the information related to the requested multicast session.

In S507, the SMF modifies the related PDU session to accept the join request for the multicast session. In other examples, the SMF may reject the request. For example, the SMF may reject the request if the UE is located outside of the service area. The acceptance/rejection of the join request may be provided within an N1 container to be delivered to the UE. The SMF may add information related to the multicast session. The information related to the multicast session may include an area session ID for a location-dependent multicast session. The information related to the multicast session may include a multicast session ID. The information related to the multicast session may be provided in an N2 container to be handled by the NG-RAN.

In S508, the AMF sends a fourth message to the NG-RAN. The fourth message may comprise the N1 container and the N2 container from S507.

In S509, the NG-RAN node forwards the fourth message to the UE. The message from the NG-RAN may be an RRC message.

Figure 6 shows another example signalling diagram between network entities and a user equipment for joining a multicast session.

In S601, a UE provides a first message to a network access node (NG-RAN). The first message may be an RRC message. In other examples, another suitable message type is used. The first message includes an N1 session management (SM) container with a PDU session modification request with a request for the UE to join a multicast (MBS) session.

In S602, the network access node (NG-RAN) provides a second message to an AMF. The second message may be an uplink NAS message. In other examples, another suitable message type is used. Within the second message, the NG-RAN node includes the N1 SM container, with the MBS session join request and information location of the user equipment. The information location of the user equipment may be a cell ID of the UE. It is noted that the NG-RAN cannot decrypt the N1 SM container received from the UE itself.

In S603, the AMF has received the second message from the NG-RAN. The N1 SM container is transparent for the AMF. The AMF does not know that the N1 SM container comprises the join request. The AMF then provides a third message to the SMF, wherein the third message comprises the cell ID of the UE, and the information from the N1 SM container. The AMF may provide the cell ID of the UE to the SMF every time the AMF communicates with the SMF. The AMF may alternatively apply this behaviour if the SMF supports MBS. The AMF may alternatively, or additionally, apply this behaviour if MBS support is part of the SMF selection criteria in the UDM. The AMF may alternatively, or additionally, apply this behaviour if the UE is registered in a specific configured data network name (DNN) and single-network slice selection assistance information (S-NSSAI). Using one or more of the criteria above for the cell ID inclusion reduces the signalling overhead in cases where it is not required. Furthermore, it also addresses backward compatibility issues with SMFs not supporting the above mechanisms.

In S604, the SMF retrieves the service area and the related MB-SMF of the multicast session from an NRF. In some examples, there may be a plurality of service areas and/or MB-SMFs. As the SMF has received the location information of the UE in the cell ID, the SMF does not need to perform any more additional signalling in order to determine the location of the UE.

In S605, the SMF determines whether the UE is in a service area of the requested multicast session. The SMF may determine whether the UE is in a service area of the requested multicast session using the received cell ID of the UE. The SMF may reject the join request of the UE if the UE is outside the service area (or service areas) of the multicast session. If there are multiple service areas for a location-dependent multicast session, the SMF selects the service area and related SMF based on the received cell ID of the UE.

In S606, the SMF retrieves information related to the requested multicast session from the determined MB-SMF. The SMF may provide an 'Nmbsmf_ Information_ request' message to the MB-SMF. The MB-SMF may respond with a 'Nmbsmf_Information_response' message including the information related to the requested multicast session.

In S607, the SMF modifies the related PDU session to accept the join request for the multicast session. In other examples, the SMF may reject the request. The acceptance/rejection of the join request may be provided within an N1 container to be delivered to the UE. The SMF may add information related to the multicast session. The information related to the multicast session may include an area session ID for a location-dependent multicast session. The information related to the multicast session may include a multicast session ID. The information related to the multicast session may be provided in an N2 container to be handled by the NG-RAN.

In S608, the AMF sends a fourth message to the NG-RAN. The fourth message may comprise the N1 container and the N2 container from S607.

In S609, the NG-RAN node forwards the fourth message to the UE. The message from the NG-RAN may be an RRC message.

In this way, as shown in Figures 5 and 6, the network can determine whether the user equipment is permitted to have access to a requested multicast session with minimal signalling. Therefore, the signalling overhead is reduced with this mechanism and network resource usage will be lower. Furthermore, the UE can connect to the multicast session more quickly because there are fewer signalling steps performed by the network.

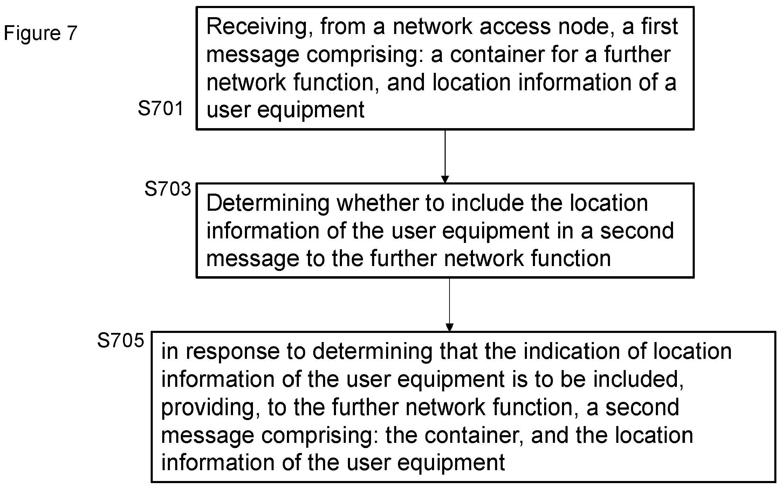

Figure 7 shows an example method flow performed by an apparatus. The apparatus may be for a network function. The apparatus may be in a network function. For example, the network function may be an AMF.

In S701, the method comprises receiving, from a network access node, a first message comprising: a container for a further network function, and location information of a user equipment.

In S703, the method comprises determining whether to include the location information of the user equipment in a second message to the further network function.

In S705, the method comprises, in response to determining that the indication of location information of the user equipment is to be included, providing, to the further network function, a second message comprising: the container, and the location information of the user equipment.

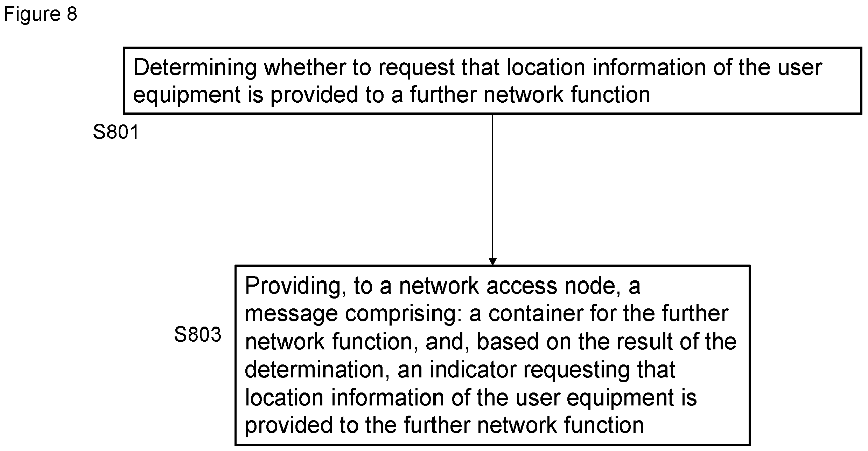

Figure 8 shows an example method flow performed by an apparatus. The apparatus may be for a terminal or a UE. The apparatus may be in a terminal or a UE.

In S801, the method comprises determining whether to request that location information of the user equipment is provided to a further network function.

In S803, the method comprises providing, to a network access node, a message comprising: a container for the further network function, and, based on the result of the determination, an indicator requesting that location information of the user equipment is provided to the further network function.

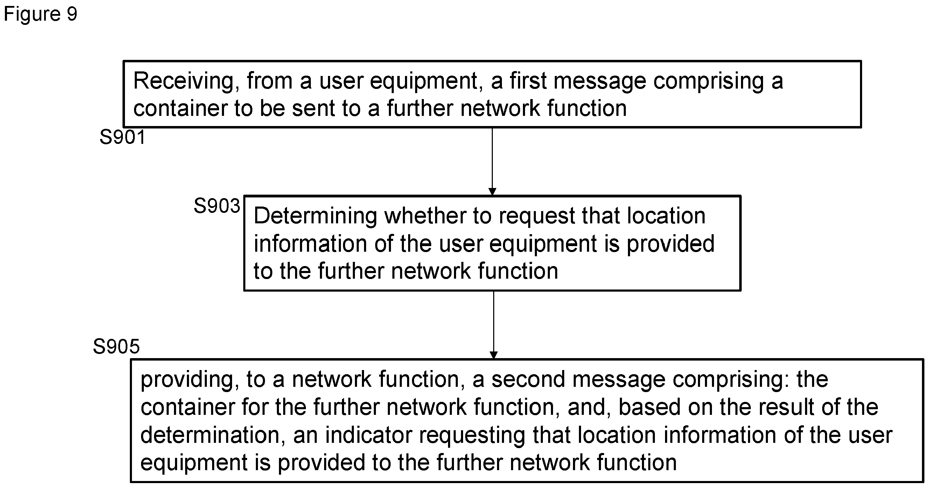

Figure 9 shows an example method flow performed by an apparatus. The apparatus may be for a network access node. The apparatus may be in a network access node. For example, the network access node is a radio access node.

In S901, the method comprises receiving, from a user equipment, a first message comprising a container to be sent to a further network function.

In S903 the method comprises determining whether to request that location information of the user equipment is provided to the further network function.

In S905, the method comprises providing, to a network function, a second message comprising: the container for the further network function, and, based on the result of the determination, an indicator requesting that location information of the user equipment is provided to the further network function.

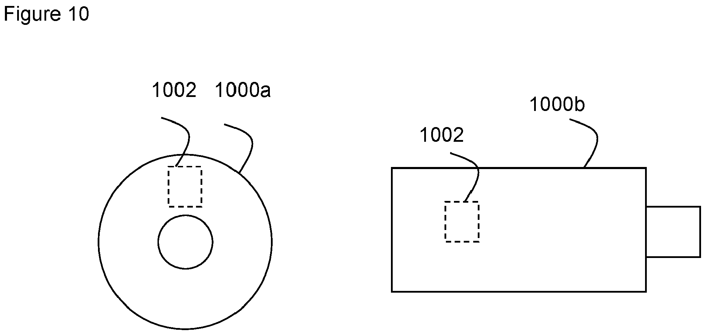

Figure 10 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the methods of Figures 7 to 9.

In should be understood that in the above signalling diagram of Figures 5 and 6, there may be variations of the steps that take place. In some examples, some of the steps shown may be omitted. In some examples, some of steps may take place in a different order than shown in the Figures.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus for a network function, the apparatus comprising means configured to perform:
receiving, from a network access node, a first message comprising: a container for a further network function, and location information of a user equipment;
determining whether to include the location information of the user equipment in a second message to the further network function; and
in response to determining that the indication of location information of the user equipment is to be included, providing, to the further network function, the second message comprising: the container, and the location information of the user equipment.

2. The apparatus according to claim 1, wherein the first message comprises an indicator, the indicator requesting that location information of the user equipment is provided to the further network function, and
wherein the determining whether to include the location information to the further network function is positive when the indicator is included in the first message.

3. The apparatus according to claim 1, wherein the determining whether to include the location information to the further network function is positive when the user equipment is registered with Data Network Name and Network Slice Selection Assistance Information that is matching a list of preconfigured values at the apparatus.

4. The apparatus according to claim 1, wherein the means are further configured to perform:
retrieving information about one or more capabilities of the further network function, from a network repository function;
determining, using the retrieved information, whether the further network function has one or more first capabilities; and
wherein the determining whether to include the location information to the further network function is positive when the further network function has the one or more first capabilities.

5. The apparatus according to claim 1, wherein the means are further configured to perform:
obtaining information about one or more capabilities of the further network function within a message from the further network function;
determining, using the obtained information, whether the further network function has one or more second capabilities; and
wherein the determining whether to include the location information to the further network function is positive when the further network function has the one or more second capabilities.

6. The apparatus according to claim 1, wherein the means are further configured to perform:
retrieving, from a unified data management, information about network function selection criteria for the further network function and the user equipment;
determining, using the retrieved information about network function selection criteria, whether the further network function has one or more first network function selection criteria; and
wherein the determining whether to include the location information to the further network function is positive when the further network function has the one or more first network function selection criteria.

7. An apparatus for a user equipment, the apparatus comprising means configured to perform:
determining whether to request that location information of the user equipment is provided to a further network function; and
providing, to a network access node, a message comprising: a container for the further network function, and, based on the result of the determination, an indicator requesting that location information of the user equipment is provided to the further network function.

8. The apparatus according to claim 7, wherein the determining whether to request that location information of the user equipment is provided to a further network function is positive when the container comprises a request of the user equipment to join a multicast session.

9. An apparatus for a network access node, the apparatus comprising means configured to perform:
receiving, from a user equipment, a first message comprising a container to be sent to a further network function;
determining whether to request that location information of the user equipment is provided to the further network function; and
providing, to a network function, a second message comprising: the container for the further network function, and, based on the result of the determination, an indicator requesting that location information of the user equipment is provided to the further network function.

10. The apparatus according to claim 9, wherein the determining whether to request that location information of the user equipment is provided to a further network function is positive when the first message from the user equipment comprises an indicator indicating that location information of the user equipment is to be provided to a further network function.

11. The apparatus according to claim 9 or 10, wherein the determining whether to request that location information of the user equipment is provided to a further network function is positive when the user equipment is participating in a multicast session.

12. The apparatus according to any preceding claim, wherein the container is an N1 session management container.

13. The apparatus according to any preceding claim, wherein the container comprises a request for the user equipment to join a multicast session within: a protocol data unit session modification request, or a protocol data unit session setup request.

14. The apparatus according to any preceding claim, wherein the location information of the user equipment comprises a cell identity of the user equipment.

15. The apparatus according to any preceding claim, wherein at least one of: the network function comprises an access and mobility management function, the further network function comprises a session management function, and the network access node comprises a radio access node.
